# EUROPÄISCHE PATENTANMELDUNG

(11) **EP 1 248 017 A2**
(43) Veröffentlichungstag der Anmeldung: **09.10.2002**
(21) Anmeldenummer: 02100258.9
(22) Anmeldetag: 15.03.2002
(51) Int. Cl.: F16H 25/24, G02B 21/26, B23Q 5/44, B23Q 5/58, B23Q 16/00

(54) **Verstelleinheit**

(30) Priorität: 16.03.2001 DE 10112706
(71) Anmelder: Leica Microsystems Wetzlar GmbH, 35578 Wetzlar (DE)
(72) Erfinder: Schalz, Karl-Josef, 35781 Weilburg (DE); Gaul, Norbert, 35606 Solms (DE)
(74) Vertreter: Reichert, Werner F., Dr.

(57) **Zusammenfassung**

Verstelleinheit für wenigstens ein zu verstellendes Element, wie einen Träger für optische Elemente, mit
- einer Antriebseinheit,
- einem Übertragungselement, das von der Antriebseinheit zu einer Bewegung angetrieben wird, und das ein Gewinde oder eine Zahnung aufweist, und
- einem Eingriffselement, das in das Gewinde bzw. die Zahnung des Übertragungselements eingreift und so durch die Bewegung des Übertragungselements angetrieben wird, und durch dessen Bewegung das Verstellelement bewegt wird.

Die Erfindung zeichnet sich dadurch aus, dass das Eingriffselement elastisch derart ausgebildet ist, dass es sich beim Anliegen des Verstellelements an einem Anschlag bzw. Hindernis elastisch verformt.

## Beschreibung

Die Erfindung bezieht sich auf eine Verstelleinheit für wenigstens ein zu verstellendes Element - nachfolgend Verstellelement genannt - wie einen Träger für optische Elemente etc. gemäß dem Oberbegriff des Patentanspruchs 1.

Derartige Verstelleinheiten werden häufig in der Feinwerktechnik eingesetzt. Beispielsweise in der Mikroskopie werden motorische Verstelleinheiten benötigt, die optische Umlenkprismen, optische Baugruppen für die Fokussierung und/oder die Brennweiteneinstellung von Objektiven, Dunkelklappen, Filter oder andere Bauteile des Mikroskops verfahren oder verschwenken bzw. zwischen verschiedenen und insbesondere zwischen zwei Positionen schalten. Hierzu weisen die bekannten Verstelleinheiten eine Antriebseinheit auf, die ein Übertragungselement antreibt, das ein Gewinde oder eine Zahnung aufweist. In das Gewinde bzw. die Zahnung greift ein Eingriffselement derart ein, dass es durch die Bewegung des Übertragungselements zu einer Bewegung angetrieben wird. Die Bewegung des Übertragungselements führt dann zu einer Bewegung des Verstellelements.

Allen - insbesondere aus der Feinwerktechnik bzw. der Optik - bekannten Verstelleinheiten gemäß dem Oberbegriff des Patentanspruchs 1 ist gemeinsam, dass die Verstellung bzw. das Umschalten relativ schnell erfolgen muss, und dass die anzufahrenden Positionen häufig hochgenau erreicht werden müssen. Hierzu werden in der Feinwerktechnik bzw. der Optik hochpräzise und damit teure Bauelemente eingesetzt. Vor allem aber darf im Falle einer Störung, wie beispielsweise des Anliegens eines oder mehrerer Teile der Einheit an einem Anschlag, die Verstelleinheit nicht beschädigt werden oder sich "festfressen". Dabei ist das Festfressen das größte Problem, da in diesem Falle die Verstelleinheit ohne vollständige Demontage nicht wieder in Gang gesetzt werden kann.

Deshalb weisen bekannte Verstelleinheiten elektronische Sicherungsschaltungen auf, die über Sensoren, Grenzwertgeber etc. verfügen, und die beim Anliegen des Verstellelements an einem Anschlag bzw. einem Hindernis den Motor der Antriebseinheit abschalten. Im Falle einer Störung der Sensoren bzw. der Grenzwertgeber oder sonstiger elektronischer Störungen kann es dennoch zu einem Festfressen der Verstelleinheit kommen, da Teile der Verstelleinheit an dem mechanischen Anschlag bzw. dem Hindernis anliegen, so dass sich die Verstelleinheit durch die Kraft des aufgrund der Störung nicht abgeschalteten Motors zwangsläufig festfrisst.

Der Erfindung liegt die Aufgabe zu Grunde, eine Verstelleinheit gemäß dem Oberbegriff des Patentanspruchs 1 derart weiterzubilden, dass sich die Verstelleinheit im Falle eines Anliegens an einem Anschlag oder an einem Hindernis weder festfrisst noch anderweitig beschädigt wird.

Eine erfindungsgemäße Lösung dieser Aufgabe ist im Patentanspruch 1 angegeben. Weiterbildungen der Erfindung sind Gegenstand der abhängigen Ansprüche. Eine besonders bevorzugte Verwendung der Erfindung bei einem Mikroskop und insbesondere in einem automatisierten Mikroskop ist in dem auf eine Verwendung gerichteten Anspruch angegeben.

Der Erfindung liegt der Gedanke zu Grunde, ein "Festfressen" bzw. eine sonstige Beschädigung einer gattungsgemäßen Verstelleinheit beim Anliegen des Trägers (beispielsweise von optischen Elementen) oder eines anderen Teils der Verstelleinheit an einem Anschlag oder an einem Hindernis nicht durch eine elektronische Sicherungsschaltung od. dgl., sondern durch eine elastische Ausbildung des Eingriffselements zu verhindern, die Sicherung also mechanisch vorzunehmen. Zur Realisierung dieses erfindungsgemäßen Grundgedankens ist das Eingriffselement elastisch derart ausgebildet, dass es sich beim Anliegen des Verstellelements an einem Anschlag bzw. Hindernis elastisch verformt. Durch diese Ausbildung ist es möglich, gezielt einen Anschlag mit einem "Überlauf" des Motors anzufahren, so dass die Verstelleinheit noch leicht gegen den Anschlag gedrückt und somit genau positioniert wird.

Aufgrund dieser Ausbildung werden ein Festfressen oder eine Beschädigung von Teilen der Verstelleinheit auch ohne ein elektronisches Sicherheitssystem verlässlich verhindert. Selbstverständlich ist es jedoch möglich -wenn auch selbst bei hohen Ansprüchen an die Sicherheit nicht erforderlich -, zusätzlich eine elektronische Sicherungsschaltung vorzusehen.

Zusätzlich ist es möglich, das Eingriffselement derart auszubilden, dass es sich aus dem Gewinde bzw. der Zahnung heraushebt und in die nächste Gewinderille bzw. in den nächsten Zahnzwischenraum absenkt. Dieses Ausbildung verhindert auch bei weiterdrehendem Motor verlässlich eine Beschädigung von Teilen. Anders als beim Einsatz Rutschkupplungen bleibt bei einer erfindungsgemäß ausgebildeten Verstelleinheit die Positioniergenauigkeit erhalten.

Der vorstehend beschriebene erfindungsgemäße Grundgedanke ist selbstverständlich auf die verschiedensten Verstelleinheiten anwendbar, wie sie insbesondere in der Feinwerktechnik bzw. bei optischen Geräten, wie Mikroskopen, automatisierten Objektiven etc. benötigt werden.

Dabei können die Verstelleinheiten den Träger rotatorisch oder translatorisch bewegen. Im Falle einer rotatorischen Bewegung kann das Übertragungselement beispielsweise eine Zahnstange sein. Bei herkömmlichen Verstelleinheiten würde als Eingriffselement ein Zahnrad od. dgl. eingesetzt werden. Anstelle eines Zahnrads kann nun erfindungsgemäß ein "Stern" eingesetzt werden, dessen einzelne "Strahlen" durch elastische Stäbe bzw. Federdrähte gebildet werden, von denen jeweils einer das Eingriffselement in der Zahnung der Zahnstange ist, und beim Anliegen des Trägers an einem Anschlag aus der Zahnung ausgehoben und anschließend in den nächsten Zahnzwischenraum der Zahnstange abgesenkt wird.

Besonders bevorzugt ist jedoch die Anwendung des erfindungsgemäßen Grundgedankens bei Verstelleinheiten, bei denen der Träger translatorisch verschoben wird. In diesem Falle können das Übertragungselement in an sich bekannter Weise eine Gewindespindel und das Verstellelement ein Schlitten sein. Bevorzugt weist das Eingriffselelement dann wenigstens einen Federdraht bzw. Federstab auf, dessen eines Ende an dem Schlitten angebracht ist, und dessen anderes Ende in eine Gewinderille der Gewindespindel federelastisch eingreift. Eine besonders sichere Verschiebung des Schlittens erhält man, wenn das Eingriffselement zwei (oder mehr) insbesondere parallele Federdrähte bzw. Federstäbe aufweist. Je größer die Zahl der Federdrähte bzw. Federstäbe ist, desto weniger Spiel weist die Verstelleneinheit auf. In jedem Falle ist es bevorzugt, wenn die Ausrichtung des oder der Federdrähte bzw. Federstäbe im "unverformten" Zustand der Steigung der Gewindespindel angepasst ist.

Unabhängig davon, ob der Träger eine translatorische oder eine rotatorische Bewegung ausführt, ist es weiter bevorzugt, wenn die Antriebseinheit einen steuerbaren Motor und insbesondere einen Elektromotor aufweist. Da das erfindungsgemäße Prinzip jedoch keine so präzise Steuerung des Motors wie bei herkömmlichen Verstelleinheiten erfordert, können auch andere Motoren, wie beispielsweise Druckluftmotoren eingesetzt werden.

Besonders vorteilhaft ist es jedoch, dass es das erfindungsgemäße Prinzip bei einer Verstellung zwischen lediglich zwei Positionen erlaubt, auch ohne elektronische Sicherungen den Träger an Anschläge "anzufahren", deren Lage die jeweilige Position bestimmt. Die Motorsteuerung kann dann über eine "Zeitsteuerung" erfolgen, die nach einer bestimmten Zeit den Motor abschaltet. Bei herkömmlichen Verstelleinheiten würde eine derartige Vorgehensweise nahezu unweigerlich zu einem "Festfressen" von Teilen der Verstelleinheit oder bei einer "knappen" Bemessung der Anschaltzeit gegebenenfalls zu einer nicht korrekten Positionierung führen.

Sollen mehr als zwei Positionen von dem Träger bzw. dem Schlitten angefahrenen oder der Träger bzw. der Schlitten kontinuierlich verstellt werden, ist es von Vorteil, wenn wenigstens ein Positionsgeber vorgesehen ist, dessen Ausgangssignal als IST-Signal der Position des Trägers an der Antriebseinheit anliegt. Dieser Ausbildung erlaubt eine hochpräzise Ansteuerung der jeweils gewünschten Position. Ein derartiger Positionsgeber kann beispielsweise ein inkrementaler Weggeber sein.

Die erfindungsgemäße Verstelleinheit kann selbstverständlich in den verschiedensten Geräten angewendet werden. Besonders bevorzugt ist ihre Verwendung jedoch in einem Mikroskop und insbesondere in einem automatisierten Mikroskop, da mit ihr kostengünstig und bei geringem Montageaufwand die verschiedenen Funktionen bzw. Verstellungen, wie sie bei einem automatisierten Mikroskop benötigt werden, durchgeführt werden können.

Die Erfindung wird nachstehend an Hand eines Ausführungsbeispiels unter Bezugnahme auf die Zeichnung näher beschrieben, in der zeigen:
- Fig. 1: den Aufbau einer herkömmlichen Verstelleinheit, und
- Fig. 2: den Aufbau einer erfindungsgemäßen Verstelleinheit für translatorische Bewegungen des Trägers.

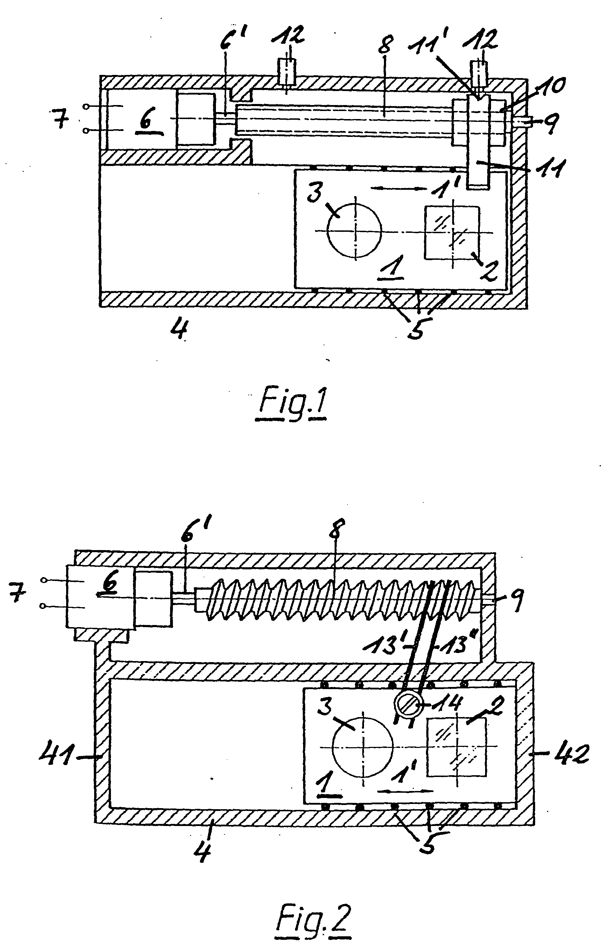

Fig. 1 zeigt eine herkömmliche Verstelleinheit, die einen Träger 1 translatorisch in Richtung des Doppelpfeils 1' verschiebt. Auf dem Träger 1 sind optische Elemente, wie beispielsweise ein Umlenkprisma 2 sowie ein weiteres Element 3 angeordnet. Der Träger 1 ist hierzu in einem Gehäuse 4 mittels Kugeln 5 linear verschiebbar gelagert.

Die Verstelleinheit weist einen umsteuerbaren Elektromotor 6 mit Anschlüssen 7 auf, wobei eine nicht dargestellte Steuereinheit für den Elektromotor 6 vorgesehen ist. Die Abtriebswelle 6' des Elektromotors 6 ist mit dem einen Ende einer Gewindespindel 8 verbunden, deren anderes Ende in dem Gehäuse 4 mittels eines Lagers 9 gelagert ist. Auf der Gewindespindel 8 ist eine Mutter 10 angeordnet, an der Führungen 11 angreifen, die mit dem Schlitten 1 fest verbunden sind. Durch eine Drehung der Abtriebswelle 6' des Elektromotors 6 und die hierdurch erzeugte Drehung der Gewindespindel 8 wird damit der Schlitten 1 in Richtung des Doppelpfeils 1' (je nach Drehrichtung) verschoben.

Problematisch bei der in Fig. 1 dargestellten herkömmlichen Verstelleinheit ist, dass die Einheit "festfrisst", wenn der Schlitten 1 an einer Wand des Gehäuses 4 anliegt und der Motor 6 die Gewindespindel 8 weiter antreibt. Deshalb sind bei der bekannten Verstelleinheit Sensoren 12 vorgesehen, die über die nicht dargestellte Steuereinheit für ein Abschalten des Motors 6 sorgen, wenn der Schlitten 1 die jeweilige Endposition erreicht hat. Hierzu weisen die Führungen 11 Nuten 11' auf, die von den bevorzugt als optische Sensoren ausgebildeten Sensoren 12 erfasst werden.

Solange die Sensoren 12 und die nicht dargestellte Steuereinheit funktionieren, ergeben sich bei der in Fig. 1 dargestellten herkömmlichen Verstelleinheit keine Probleme. Versagt jedoch einer der Sensoren 12 und/oder die Steuereinheit, so dreht der Motors 6 die Gewindespindel 8 auch dann weiter, wenn der Schlitten 1 an einer Wand des Gehäuses 4 anliegt. In diesem Falle "frisst" sich die Mutter 10 auf der Gewindespindel 8 fest.

Fig. 2 zeigt ein erfindungsgemäßes Ausführungsbeispiel, bei dem gleiche Teile wie in Fig. 1 mit den selben Bezugszeichen versehen sind, so dass auf eine erneute Vorstellung zumindest teilweise verzichtet wird.

Bei dem erfindungsgemäßen Ausführungsbeispiel wird die Wirkverbindung zwischen der Gewindespindel 8 und dem Schlitten 1 nicht über eine Mutter 10 und an der Mutter 10 angreifende Führungen 11, die mit dem Schlitten 1 fest verbunden sind, hergestellt, sondern über zwei Federdrähte 13' bzw. 13". Die Federdrähte 13 sind mittels einer Schraube 14 an dem Schlitten 1 eingespannt. Das freie Ende der Federdrähte 13 greift in jeweils eine Gewinderille der Gewindespindel 8 ein. Die Federdrähte 13 sind dabei so ausgerichtet, dass sie im "unverformten" Zustand in der jeweiligen Gewinderille liegen, ihre Steigung relativ zur Längsseite des Schlittens 1 entspricht also der Steigung der Gewindespindel 8. Aufgrund dieser Ausbildung wird der Schlitten 1 zunächst durch eine Drehung der Gewindespindel 8 in Richtung des Doppelpfeils 1', also nach links bzw. rechts in Fig. 2 verschoben. Wenn der Schlitten an der linken oder rechten Seite 41 bzw. 42 des Gehäuses 4 zur Anlage kommt und sich die Gewindespindel 8 aufgrund der Drehung des Motors 6 weiterdreht, werden die Federdrähte 13' und 13" zunächst elastisch verformt. Damit ist es möglich, den Motor so einzustellen, dass der Schlitten immer gegen den Anschlag läuft und an diesem mit einer bestimmten Vorspannung anliegt.

Wenn nach dem Anliegen des Schlittens an dem Anschlag der Motor nicht abgeschaltet wird, heben sich die Federdrähte 13° und 13" aus der Gewinderille, in der sie sich momentan befinden, unter einer elastischen Verformung heraus und senken sich in die nächste Gewinderille der Gewindespindel bzw. Gewindestange 8 ab. Dieser Vorgang kann sich beliebig oft wiederholen, ohne dass es zu einer Beschädigung der Schlittens 1 oder zu einem Festfressen eines Teils der erfindungsgemäßen Verstelleinheit kommt. Damit kann auf eine elektronische Sicherungsschaltung oder dergleichen für den Motor 6 verzichtet werden. Insbesondere ist es möglich, die beiden durch die als Anschläge wirkenden Gehäusewände 41 bzw. 42 definierten Positionen dadurch anzufahren, dass der Motor 6 für eine bestimmte Zeit mit einer bestimmten Drehrichtung angeschaltet wird.

Die erfindungsgemäße Ausbildung hat den weiteren gravierenden Vorteil, dass die Anforderungen an die Genauigkeit der Gewindespindel 8 und die Justierung der einzelnen Teile relativ zueinander geringer als bei herkömmlichen Vorrichtungen ist.

Selbstverständlich ist aber auch eine Steuerung über Weggeber etc. oder Positionssensoren, die bestimmte Positionen definieren, möglich.

Vorstehend ist die Erfindung anhand eines Ausführungsbeispiels ohne Beschränkung des allgemeinen Erfindungsgedankens beschrieben worden, wie er sich insbesondere aus den Ansprüchen und dem allgemeinen Beschreibungsteil ergibt. Insbesondere ist die Erfindung nicht auf die Verwendung bei Verstelleinheiten beschränkt, die einen oder mehrere Teile translatorisch bewegen. Die Bewegung der Teile kann auch rotatorisch oder längs beliebig gekrümmter Bahnen erfolgen.

### Bezugszeichenliste

- 1: Verstellelement / Träger
- 1': Doppelpfeil / Bewegungsrichtung
- 2: optisches Element / Umlenkprisma
- 3: optisches Element
- 4: Gehäuse
- 5: Kugeln der Linearführung
- 6: Elektromotor
- 6': Abtriebswelle
- 7: Anschlüsse des Elektromotors
- 8: Gewindespindel
- 9: Lager der Gewindespindel im Gehäuse
- 10: Mutter auf Gewindespindel
- 11: Führungen
- 11': Nut in Führung 11
- 12: Sensoren
- 13', 13": Federdrähte
- 14: Schraube zur Befestigung der Federdrähte
- 41: linke Gehäusewand / Anschlag
- 42: rechte Gehäusewand / Anschlag

## Patentansprüche

1. Verstelleinheit für wenigstens ein zu verstellendes Element, wie einen Träger (1) für optische Elemente (2,3), mit
- einer Antriebseinheit (6),
- einem Übertragungselement (8), das von der Antriebseinheit (6) zu einer Bewegung angetrieben wird, und das ein Gewinde oder eine Zahnung aufweist, und
- einem Eingriffselement, das in das Gewinde bzw. die Zahnung des Übertragungselements (8) eingreift und so durch die Bewegung des Übertragungselements (8) angetrieben wird, und durch dessen Bewegung das Verstellelement (1) bewegt wird,
**dadurch gekennzeichnet, dass** das Eingriffselement (13', 13") elastisch derart ausgebildet ist, dass es sich beim Anliegen des Verstellelements (1) an einem Anschlag (41, 42) bzw. Hindernis elastisch verformt.

2. Verstelleinheit nach Anspruch 1,
**dadurch gekennzeichnet, dass** das Übertragungselement eine Gewindespindel (8) und das Verstellelement ein Schlitten (1) ist.

3. Verstelleinheit nach Anspruch 2,
**dadurch gekennzeichnet, dass** das Eingriffselelement wenigstens einen Federdraht bzw. Federstab (13) aufweist, dessen eines Ende an dem Schlitten angebracht ist, und dessen anderes Ende in eine Gewinderille der Gewindespindel (8) eingreift.

4. Verstelleinheit nach Anspruch 4,
**dadurch gekennzeichnet, dass** das Ende des Federdrahts bzw. des Federstabs (13) in die Gewinderille spielfrei eingreift.

5. Verstelleinheit nach Anspruch 3 oder 4,
**dadurch gekennzeichnet, dass** das Eingriffselement zwei Federdrähte bzw. Federstäbe (13', 13") aufweist.

6. Verstelleinheit nach einem der Ansprüche 3 bis 5,
**dadurch gekennzeichnet, dass** die Ausrichtung des oder der Federdrähte bzw. Federstäbe (13', 13") der Steigung der Gewindespindel (8) angepasst ist.

7. Verstelleinheit nach einem der Ansprüche 1 bis 6,
**dadurch gekennzeichnet, dass** die Antriebseinheit einen umsteuerbaren Motor und insbesondere einen Elektromotor (6) aufweist.

8. Verstelleinheit nach einem der Ansprüche 1 bis 7,
**dadurch gekennzeichnet, dass** bei einer Verstellung zwischen lediglich zwei Positionen Anschläge (41, 42) vorgesehen sind, deren Lage die jeweilige Position bestimmt.

9. Verstelleinheit nach einem der Ansprüche 1 bis 8,
**dadurch gekennzeichnet, dass** wenigstens ein Positionsgeber vorgesehen ist, dessen Ausgangssignal als IST-Signal der Position des Trägers (1) an der Antriebseinheit anliegt.

10. Verstelleinheit nach einem der Ansprüche 1 bis 9,
**dadurch gekennzeichnet, dass** das Eingriffselement sich beim Anliegen des Verstellelements (1) an einem Anschlag (41, 42) bzw. Hindernis aus dem Gewinde bzw. der Zahnung heraushebt und in die nächste Gewinderille bzw. in den nächsten Zahnzwischenraum absenkt, wenn der Motor der Antriebseinheit nach dem Anliegen nicht abgeschaltet wird.

11. Verwendung einer Verstelleinheit gemäß einem der Ansprüche 1 bis 10 in einem mechanische, optische und/oder elektronische Bauelemente enthaltenden Modul, wobei mindestens eines dieser Bauelemente mittels translatorischer und/oder rotatorischer Bewegung in Wirkstellung bzw. außer Wirkstellung bringbar ist.

12. Verwendung einer Verstelleinheit gemäß einem der Ansprüche 1 bis 10 in einem Mikroskop und insbesondere in einem automatisierten Mikroskop.
